# EUROPEAN PATENT APPLICATION

(11) **EP 4 184 021 A1**
(43) Date of publication of application: **24.05.2023**
(21) Application number: 21208891.8
(22) Date of filing: 18.11.2021
(51) Int. Cl.: F16B 25/00

(54) **TRI-COMPONENT SCREW**

(71) Applicant: Hilti Aktiengesellschaft, 9494 Schaan (LI)
(72) Inventor: Schneider, Roland, 6824 Schlins (AT); Spampatti, Matteo, 9470 Buchs (CH)
(74) Representative: Hilti Aktiengesellschaft Corporate Intellectual Property

(57) **Abstract**

The invention relates to a screw comprising a tipward shank section, a screw thread helix, which is arranged on the tipward shank section, which protrudes from the tipward shank section, and which winds around the tipward shank section, and a rearward shank section having a coupler for introducing tensile load into the screw, wherein the tipward shank section and the screw thread helix are non-monolithic with respect to one another, characterized in that the tipward shank section and the rearward shank section are non-monolithic with respect to one another.

## Description

The invention relates to a screw according to the preamble of claim 1. A screw of this type comprises a tipward shank section, a screw thread helix, which is arranged on the tipward shank section, which protrudes from the tipward shank section, and which winds around the tipward shank section, and a rearward shank section having a coupler for introducing tensile load into the screw, wherein the tipward shank section and the screw thread helix are non-monolithic with respect to one another.

US 2010216560A1 discloses concrete screws that comprise a screw body made of stainless steel, on which hard metal cutting elements are provided.

WO19170507A1 discloses an example of an axially bimetallic screw, in which the material of a tip section of the screw differs from the material of the remainder of the screw.

US20110142569A1 describes screw anchors which are mostly monolithic, with an exception of the foremost part of the screw thread, which is a separate part.

US2010290858 A1 discloses screws comprising a shank-like element and a separate screw thread helix attached thereto, wherein, depending on the intended use, the separate screw thread helix can comprise two separate parts.

WO12084385 A1 discloses another anchor with a separate cutting helix.

Further screw anchors comprising separate screw thread helixes are disclosed in EP 3869051 A1, EP 3816460 A1, EP 3816461 A1 and EP 3916246 A.

It is an object of the invention to provide a screw that allows particularly versatile, easy and/or economical manufacturing, whilst providing particularly good performance and/or reliability.

This object is achieved by a screw according to claim 1. Dependent claims refer to preferred embodiments of the invention.

The screw is characterized in that the tipward shank section and the rearward shank section are non-monolithic with respect to one another.

Accordingly, the screw is made of at least three separate components, which are joined to give the screw.

Providing the tipward shank section and the screw thread helix arranged thereon as non-monolithic components allows to resolve conflicting material properties and to thus synergistically improve overall performance of the screw: For example, the screw thread helix material could be optimised in view of edge-holding properties of the cutting edge or edges of the screw thread helix, whereas the tipward shank section material could be, independently, optimised in view of stability against corrosive attacks. Or, for example, the screw thread helix material could be optimised for high hardness (e.g. in order to achieve good thread cutting properties in concrete and/or reinforcement bars), while the tipward shank section could be optimized for high strength together with high ductility, and the rearward shank section could be optimized for high corrosion resistance or low thermal conductivity (that is beneficial e.g. for fastening facade panels).

It is now proposed to also provide the shank itself in non-monolithic manner. In particular, the shank comprises an elongate tipward shank section, which carries the screw thread helix and which provides connection to the screw thread helix, and an elongate rearward shank section, which provides the coupler (e.g. the screw head or the rear screw thread). Said rearward shank section is fixedly attached to the tipward shank section, but said rearward shank section is non-monolithic with respect to the tipward shank section. This allows to provide particularly high versatility at particularly low manufacturing effort. For example, different length or different drive-type screws can be provided without the requirement of modifying the usually relatively complex manufacturing tooling for the load bearing part of the screw. In particular, it is possible to provide very long shank lengths and/or non-standard head geometries that cannot be easily manufactured with traditional production methods such as cold forming, and to nevertheless produce the tipward shank section by cold forming, in particular by rolling. This, in term, might broaden the field of use of concrete screws to a variety of applications, such as dedicated concrete-wood connections.

Thus, the concept of a radially separate screw (in of a particular radially bimetallic screw) comprising a shank and a separate screw thread helix is extended to a modular screw concept comprising - at least - three joined components: tipward shank section, screw thread helix, rearward shank section (which could also be named head section). This allows manufacturing of standardized tipward shank sections and screw thread helixes, which can be configured to particular needs of various applications by changing the rearward shank sections. Hence, a broad variety of head configurations can benefit from the radially separate concept.

In some embodiments, the screw might also have at least one additional section, which is provided in addition to the tipward shank section, the screw thread helix, and the rearward shank section. Such an additional section might include a splint or a swivels or other elements. In particular, the additional might be provided on the rearward shank section.

The screw has a longitudinal axis, which extends through the tipward shank section and through the rearward shank section, wherein the elongate tipward shank section and the elongate rearward shank section run parallel to the longitudinal axis. In particular, the elongate tipward shank section and the elongate rearward shank section are arranged in coaxial relationship. The tipward shank section is located closer to the tip of the screw than is the rearward shank section, wherein the tip is that end of the screw shank that is intended to be inserted first into a borehole when the screw is installed as intended. In particular, the tipward shank section may form the tip of the screw. The tip might be pointed, but is preferably blunt or frustoconical, in particular if the screw is a concrete screw.

The screw thread helix winds around the longitudinal axis of the screw. The screw thread helix is usually generally helical, but could deviate from a strict mathematical helix, e.g. in order to provide additional functionality. The screw thread helix winds around the shank and the longitudinal axis of the shank, i.e. it turns helically around the shank, in particular by one or more turns, more preferably by at least two or three turns. The screw thread helix forms an external screw thread. It radially protrudes from the tipward shank section and can engage a mating internal screw thread. The screw thread is connected to the tipward shank section so as to transfer rearwardly directed pull-out loads. The screw thread helix is preferentially axially offset with respect to the rearward shank section, i.e. the screw thread helix preferably does not reach to wind around the rearward shank section (wherein axial refers to the longitudinal axis of the screw).

The screw thread helix could have a continuous cutting edge structure, but could also have a sawtooth structure at least in some regions, in particular within a start of the screw thread. The screw could also be provided with cutting bodies embedded in the screw thread helix, in particular in the start of the screw thread helix.

For additional functionality, the screw can also comprise at least one auxiliary screw thread, which might be integrally or non-integrally provided on the tipward shank section (or also on the rearward shank section).

The coupler for introducing tensile load into the screw can preferentially be head, an external screw thread, an internal screw thread or an eyelet. The external screw thread and/or the internal screw thread can in particular be metric or imperial. The external screw thread could also be a coarse, rebar-type screw thread (e.g. a Dywidag thread). Moreover, the external screw thread could also be an extra-long metric screw thread.

Preferentially, the rearward shank section comprises a screw drive for rotationally coupling the screw to a wrench. This screw drive can be used for imparting torque on the shank. If a head is provided, the screw drive is preferably provided on the head. The screw drive could be an internal or an external structure. It is particularly preferred that the screw drive is an external hex structure or internal hex structure. The coupler and the screw drive could be integrated and in particular, the coupler can thus be a hex head.

The rearward shank section, the screw thread helix and/or the tipward shank section can consist of various materials, including metallic and non-metallic (e.g. plastic, ceramic) materials for the rearward shank section and/or the tipward shank section, as well as metallic and non-metallic (e.g. ceramic) materials for the screw thread helix. In particular, the rearward shank section, the screw thread helix and/or the tipward shank section may consist of carbon steel or stainless steel (in particular a ferrous alloy with a minimum of approximately 11 weight-percent chromium). Components made of carbon steel can be coated to provide tailored corrosion resistance in corrosive environments.

The rearward shank section, the screw thread helix and/or the tipward shank can consist of generally identical or of different materials. Preferably, the tipward shank section and the screw thread helix consist of different materials, which allows to optimise material properties in view of the respective functions, as already mentioned above. The tipward shank section and the rearward shank section could consist of same materials or also different materials. Having same or similar materials might facilitate joining.

The rearward shank section and the tipward shank section are preferably connected via a clamped, welded, brazed or/and glued connection. The tipward shank section and the screw thread helix are preferably connected via a clamped, welded, brazed or/and glued connection. In this connection, "clamped" can include mechanically clamping based on form-locking and/or force-locking connection.

As already hinted at above, the screw is preferably a concrete screw, i.e. the screw, more particular the screw thread helix thereof, is able to, at least partly, cut its mating internal screw thread groove in a concrete substrate. In particular, a ratio of the outer screw thread diameter of the screw thread helix to the pitch of the screw thread helix can be between 1 and 2, in particular between 1,2 and 1,6, at least in some regions of the screw thread helix, more preferably at least in some regions of the screw thread helix located near the tip. These are typical dimensions for concrete screws.

The diameter of the tipward shank section and the diameter of the rearward shank section can, preferably, be significantly different. Manufacturing of a monolithic, one-piece shaft with significant changes of diameters is challenging. Doing so with separate shank sections might be advantageous from manufacturing point of view.

The invention also relates to a method for producing a first screw and a second screw, in which the tipward shank section of the first screw is connected to the rearward shank section of the first screw, and in which the tipward shank section of the second screw is connected to the rearward shank section of the second screw, wherein the tipward shank section of the first screw and the tipward shank section of the second screw have generally identical dimensions, and wherein the rearward shank section of the first screw and the rearward shank section of the second screw have different dimensions.

Accordingly, same-type tipward shank sections are connected to different-type rearward shank sections in order to obtain different-type screws.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a side view of a first embodiment of a screw.
Figure 2 is a partly exploded view of the screw of figure 1, showing the rearward shank section separate from the remainder of the screw.
Figure 3 is a side view of a second embodiment of a screw.
Figure 4 is a partly exploded view of the screw of figure 3, showing the rearward shank section separate from the remainder of the screw.
Figure 5 is a side view of a third embodiment of a screw.

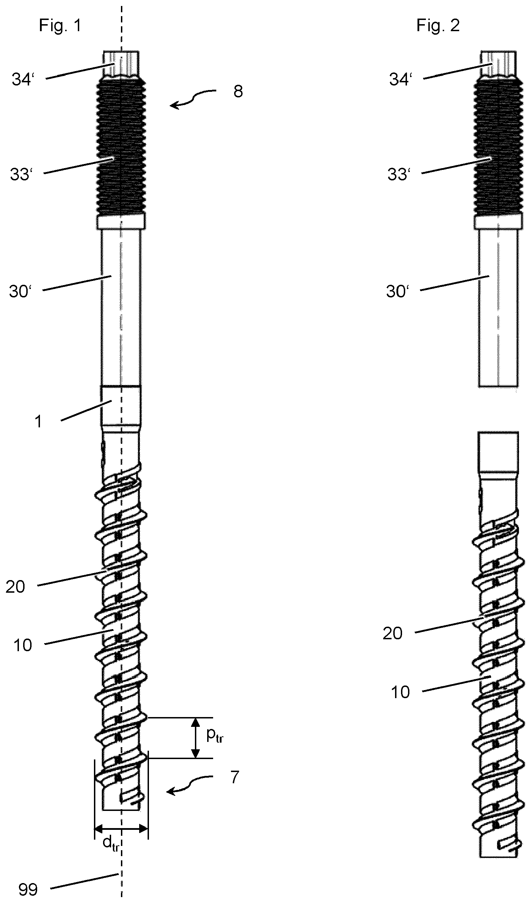

Figures 1 and 2 show a first embodiment of a screw. The screw comprises a shank 1 having a tip 7 at its front end, and, at its opposite other end, a rear end 8. The tip 7 is that end of the shank 1 which is intended to be inserted first into a borehole. The longitudinal axis 99 of the shank 1 extends through the tip 7 and through the rear end 8.

The shank 1 consists of two separate elongate parts, namely of a tipward shank section 10 and a rearward shank section 30', which are tightly directly connected, but which are non-monolithic with respect to one another. The tip 7 is formed on the tipward shank section 10. The rearward shank section 30' is axially rearwardly offset with respect to the tipward shank section 10. Both the tipward shank section 10 and the rearward shank section 30' are elongate and aligned along the longitudinal axis 99.

The screw furthermore comprises a screw thread helix 20, which forms an external screw thread of the screw. The screw thread helix 20 is arranged alongside the tipward shank section 10 and is directly tightly connected thereto. The screw thread helix 20 is offset with respect to the rearward shank section 30'. The screw thread helix 20 winds around the tipward shank section 10. The screw thread helix 20 and the tipward shank section 10, respectively, are separate and in particular materially distinct elements.

The screw thread helix 20 has an outer screw thread diameter dₜᵣ. At least near the tip 11 of the non-installed screw, a ratio of the outer screw thread diameter dₜᵣ of the screw thread helix 20 to the pitch pₜᵣ of the screw thread helix 20 is between 1 and 2, in particular between 1,2 and 1,6. The screw thread helix 20 can have a Vickers hardness between 500 HV10 and 800 HV10, preferably between 650 HV10 and 750 HV10, in particular both according to ISO 6507.

The rearward shank section 30' comprises a coupler 33' for introducing tensile load into the screw. In the first embodiment, the coupler 33' is an external screw thread.

The rearward shank section 30' further comprises a screw drive 34' for rotationally coupling the screw to a wrench, i.e. for transmitting torque to the shank 1 for rotating the shank 1 around the longitudinal axis 99 of the shank 1 for installing the screw. In the present embodiment, the screw drive 34' is an external hex structure arranged at the rear end 8 of the shank.

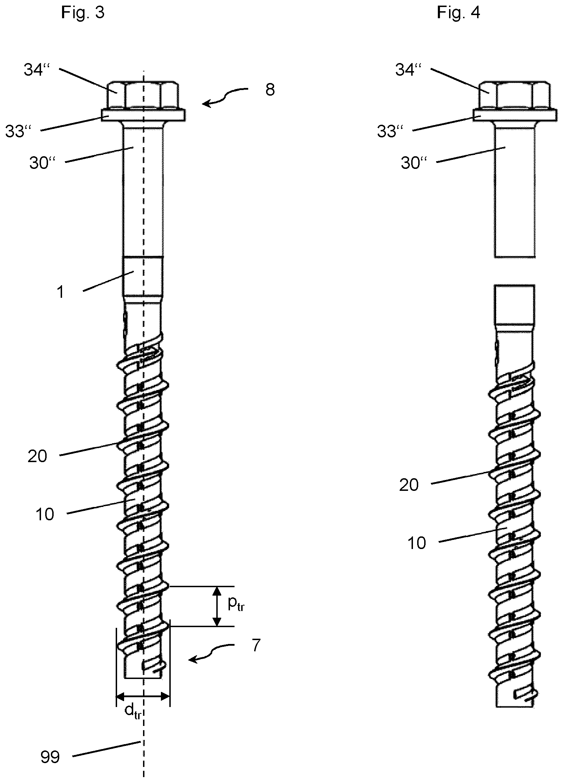

Figures 3 and 4 show a second embodiment of a screw. The embodiment of figures 3 and 4 differs from that of figures 1 and 2 only with regards to the respective rearward shank sections. Therefore, only the different rearward shank section 30" is described below, and reference is made to the description above for the remainder of the screw.

In the embodiment of figures 2 and 3, the rearward shank section 30" comprises again a coupler 33" for introducing tensile load into the screw, but in case of this embodiment, the coupler 33" is a screw head.

In the embodiment of figures 2 and 3, the rearward shank section 30" comprises again a screw drive 34" for rotationally coupling the screw to a wrench, i.e. for transmitting torque to the shank 1 for rotating the shank 1 around the longitudinal axis 99 of the shank 1 for installing the screw. In the embodiment of figures 2 and 3, the screw drive 34" is an external hex structure arranged at the head-like coupler 33", i.e. the coupler 33" is a hex head including the hex screw drive 34".

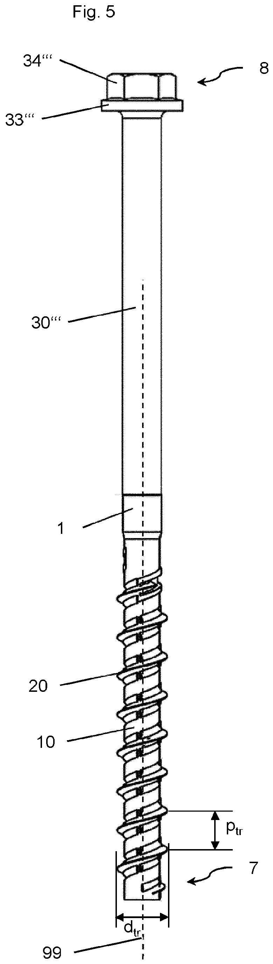

Figure 5 shows a third embodiment of a screw. The embodiment of figure 5 differs from that of figures 2 and 3 only with regards to the length of the respective rearward shank sections. The rearward shank section 30'" of the third embodiment has significantly greater length than the rearward shank section 30" of the second embodiment.

## Claims

1. Screw comprising
- a tipward shank section (10),
- a screw thread helix (20), which is arranged on the tipward shank section (10), which protrudes from the tipward shank section (10), and which winds around the tipward shank section (10), and
- a rearward shank section (30) having a coupler (33) for introducing tensile load into the screw,
- wherein the tipward shank section (10) and the screw thread helix (20) are non-monolithic with respect to one another,
**characterized in that**
- the tipward shank section (10) and the rearward shank section (30) are non-monolithic with respect to one another.

2. Screw according to claim 1,
**characterized in that**
the coupler (33) is a head, an external screw thread, an internal screw thread or an eyelet.

3. Screw according to any of the proceeding claims,
**characterized in that**
the rearward shank section (30) comprises a screw drive (34) for rotationally coupling the screw to a wrench.

4. Screw according to claim 3,
**characterized in that**
the screw drive (34) is an external hex structure or internal hex structure.

5. Screw according to any of the proceeding claims,
**characterized in that**
the rearward shank section (30), the screw thread helix (20) and/or the tipward shank section (10) consist of carbon steel or stainless steel.

6. Screw according to any of the proceeding claims,
**characterized in that**
the tipward shank section (10) and the screw thread helix (20) consist of different materials, and that
the tipward shank section (10) and the rearward shank section (30) consist of same materials or different materials.

7. Screw according to any of the proceeding claims,
**characterized in that**
the rearward shank section (30) and the tipward shank section (10) are connected via a clamped, welded, brazed or/and glued connection.

8. Screw according to any of the proceeding claims,
**characterized in that**
the screw is a concrete tapping screw, and/or
a ratio of the outer screw thread diameter (dₜᵣ) of the screw thread helix (20) to the pitch (pₜᵣ) of the screw thread helix (20) is between 1 and 2, in particular between 1,2 and 1,6, at least in some regions of the screw thread helix (20).

9. Method for producing a first screw according to any of the proceeding claims and a second screw according to any of the proceeding claims, in which the tipward shank section of the first screw is connected to the rearward shank section of the first screw, and in which the tipward shank section of the second screw is connected to the rearward shank section of the second screw, wherein the tipward shank section of the first screw and the tipward shank section of the second screw have generally identical dimensions, and wherein the rearward shank section of the first screw and the rearward shank section of the second screw have different dimensions.
